# EUROPÄISCHE PATENTSCHRIFT

(11) **EP 1 057 231 B1**
(45) Veröffentlichungstag und Bekanntmachung des Hinweises auf die Patenterteilung: **26.06.2002**
(21) Anmeldenummer: 98936059.9
(22) Anmeldetag: 07.08.1998
(51) Int. Cl.: H02G 1/08

(54) **VORRICHTUNG ZUM EINSETZEN VON LANGGESTRECKTEN GEGENSTÄNDEN IN KLAMMERN**
DEVICE FOR INSERTING ELONGATED OBJECTS INTO CLAMPS
DISPOSITIF POUR INSERER DES OBJETS LONGS DANS DES BRIDES DE FIXATION

(30) Priorität: 17.02.1998 EP 98102683
(43) Veröffentlichungstag der Anmeldung: 06.12.2000
(73) Patentinhaber: KA-TE System AG, CH-8041 Zürich (CH); Hecht, Reinhard, 93047 Regensburg (DE); Manstorfer, Karl, 93047 Regensburg (DE)
(72) Erfinder: HECHT, Reinhard, D-93047 Regensburg (DE); MANSTORFER, Karl, D-93047 Regensburg (DE); ULRICH, Hanspeter, CH-8617 Mönchaltorf (CH); WYDER, Hans, CH-8617 Mönchaltorf (CH); BUNSCHI, Hans, CH-8041 Zürich (CH); WEINGARTEN, Marco, CH-8041 Zürich (CH)
(74) Vertreter: Patentanwälte Schaad, Balass, Menzl & Partner AG
(86) Internationale Anmeldenummer: CH9800332
(87) Internationale Veröffentlichungsnummer: WO9943063

(56) Entgegenhaltungen:
- EP-A- 0 109 739
- EP-A- 0 251 907

## Beschreibung

Die vorliegende Erfindung betrifft eine Vorrichtung zum Einsetzen von langgestreckten Gegenständen, wie Kabel oder Rohre, in Klammern, die im Innern eines nicht begehbaren Rohres angeordnet sind, gemäss dem Oberbegriff des Anspruchs 1.

Eine Vorrichtung dieser Art ist aus der EP-A-0 109 739 bekannt. Sie weist ein über Kufen an der Innenwand eines Rohres abstützbares Gestell auf, das mittels eines Seiles in Rohrlängsrichtung bewegbar ist. Am Gestell sind in Längsrichtung hintereinander zwei, individuell in Längsrichtung verschiebbar, um die Längsachse drehbar und in radialer Richtung bewegbar angetriebene Setzköpfe angeordnet, die je eine in Längsrichtung verlaufende Aufnahmenut für die Aufnahme eines und desselben Kabels aufweisen. Zum Biegen des Kabels in die gewünschte Richtung werden die beiden Setzköpfe relativ zueinander um die Längsachse verdreht. Zum Einsetzen des gerichteten Kabels in eine an der Rohrwand befestigte Klammer, werden die beiden Setzköpfe, in Zugrichtung des Seiles gesehen, in eine stromabwärts der Klammer liegende Position und dann in radialer Richtung gegen aussen bewegt, um das Kabel in die Klammer einzusetzen. Am Gestell ist eine ebenfalls über Kufen an der Rohrinnenwand abstützbare Stützeinrichtung angehängt, die ein mittels eines Zylinder-Kolbenaggregats in radialer Richtung bewegbares Stützelement mit einer Vertiefung für die Aufnahme des Kabels aufweist. Mittels des Stützelements wird das Kabel zwischen der Klammer, in welcher es bereits eingesetzt wurde und den Setzköpfen abgestützt, indem es gegen die Rohrwand gedrückt wird. Zum Vorbeibewegen des Stützelements an einer Klammer, wird es mittels des Zylinder-Kolbenaggregats vorübergehend abgesenkt.

Es ist eine Aufgabe der vorliegenden Erfindung eine gattungsgemässe Vorrichtung zu schaffen, die bei einfachem Aufbau eine wesentlich grössere Leistungsfähigkeit aufweist.

Diese Aufgabe wird mit einer Vorrichtung gelöst, die die Merkmale des Anspruchs 1 aufweist. Es lassen sich mehrere langgestreckte Gegenstände in einem einzigen Arbeitsgang in im Innern eines nicht begehbaren Rohres nebeneinander angeordnete Klammern einsetzen.

Eine besonders bevorzugte Ausbildungsform der Vorrichtung ist im Anspruch 2 angegeben. Diese erlaubt es mit ein und demselben Setzkopf, langgestreckte Gegenstände in Rohren mit unterschiedlichem Durchmesser in die Klammern einzusetzen. Weiter ermöglicht diese Ausbildungsform das Anordnen der Klammern sehr nahe nebeneinander, da benachbarte Gegenstände nacheinander in die betreffenden Klammern eingesetzt werden und somit der Auslenkbereich jeweils nur einer Klammer benötigt wird.

Die im Anspruch 8 angegebene bevorzugte Ausbildungsform gestattet eine problemlose und wirtschaftliche Anpassung an unterschiedliche Durchmesser des nichtbegehbaren Rohres. Dabei kann der Hauptmodul, der insbesondere auch den Antrieb zum Bewegen des Sitzkopfes sowie die notwendigen Elektronikkomponenten, Pneumatik- oder Hydraulikventile enthalten kann, für sämtliche in Frage kommenden Durchmesser des nichtbegehbaren Rohres der gleiche sein. Die jeweilige Anpassung an unterschiedliche Rohrdurchmesser erfolgt durch den Einsatz unterschiedlicher Adapter, durch die der Setzkopf bzw. die Führungseinrichtung in Radialrichtung entsprechend versetzt werden.

Weitere bevorzugte Ausbildungsformen des Erfindungsgegenstandes sind in den weiteren abhängigen Ansprüchen angegeben.

Die vorliegende Erfindung wird anhand eines in der Zeichnung dargestellten Ausführungsbeispiels näher erläutert. Es zeigen rein schematisch:
- Fig. 1: in Ansicht eine in einem in Längsrichtung geschnitten dargestellten Rohr angeordnete Vorrichtung zum Einsetzen von langgestreckten Gegenständen in Klammern;
- Fig. 2: ebenfalls in Ansicht und gegenüber Fig. 1 vergrössert und teilweise im Schnitt einen Teil der dort gezeigten Vorrichtung;
- Fig. 3: die in den Fig. 1 und 2 gezeigte Vorrichtung in einem Schnitt entlang der Linie III-III dieser Figuren;
- Fig. 4: in Seitenansicht und teilweise geschnitten entlang der Linie IV-IV der Fig. 2 die Vorrichtung;
- Fig. 5: eine Fig. 1 entsprechende Ansicht einer weiteren Ausbildungsform einer Vorrichtung zum Einsetzen von langgestreckten Gegenständen in Klammern;
- Fig. 6: eine Seitenansicht der Vorrichtung gemäss Fig. 5, wobei der Übersichtlichkeit halber die Führungseinrichtung weggelassen ist;
- Fig. 7: einen Horizontalschnitt der Vorrichtung gemäss Figur 5 ohne Führungseinrichtung;
- Fig. 8: eine Draufsicht der Vorrichtung gemäss Fig. 5;
- Fig. 9: die in den Fig. 5 und 8 gezeigte Vorrichtung in einem Schnitt entsprechend der Linie V-V der Fig. 8;
- Fig. 10: die in der Fig. 1 gezeigte Vorrichtung in einem Schnitt entsprechend der Linie VI-VI der Fig. 1; und
- Fig. 11-13: Seitenansichten eines Teils der Vorrichtung gemäss Fig. 5 mit Adaptern zur Anpassung an unterschiedliche Durchmesser des nichtbegehbaren Rohres.

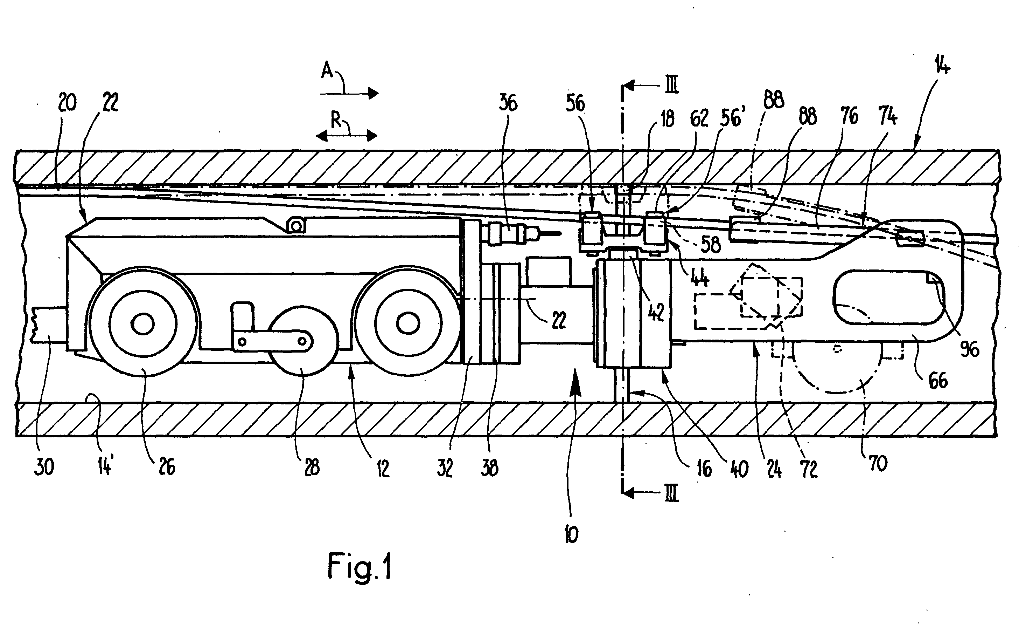

Die in den Figuren 1 bis 4 dargestellte Vorrichtung 10 weist ein fahrbares Gestell 12 auf, das im Innern eines nichtbegehbaren Rohres 14, beispielsweise eines Kanalisationsrohres, angeordnet ist. In diesem sind in Rohrlängsrichtung R im Abstand hintereinander Innenbriden 16 angeordnet, die im Deckenbereich des Rohres 14 in Umfangsrichtung nebeneinander angeordnete clipartige Klammern 18 aufweisen. Die Vorrichtung 10 ist dazu bestimmt, in das Rohr 14 eingezogene, langgestreckte Gegenstände 20, wie Kabel oder Schutzrohre für Kabel, in die Klammern einzusetzen. Bei den Kabeln handelt es sich insbesondere um Lichtwellenleiterkabel, die für die Datenübertragung verwendet werden. Derartige Kabel werden auch in die Schutzrohre nach deren Montage im Rohr 14 eingezogen oder sind bei deren Montage bereits in den Schutzrohren angeordnet.

Das Gestell 12 weist einerseits ein allgemein bekanntes ferngesteuertes, selbstfahrendes Kanalroboterfahrzeug 22 und andererseits eine an diesem stirnseitig angeordnete Arbeitseinheit 24 auf. Die Arbeitseinheit 24 ist mittels des Kanalroboterfahrzeugs 22 in Rohrlängsrichtung R zu den Innenbriden 16 durch Antrieb der an der Rohrinnenwand 14' anliegenden Räder 26 verfahrbar. Am Kanalroboterfahrzeug 22 ist ein ebenfalls an der Rohrinnenwand 14' anliegendes Messrad 28 angeordnet, das mit einem Drehwinkelaufnehmer verbunden ist, welcher die durch die Drehung des Messrades 28 erzeugten Signale über das Speise- und Signalkabel 30 an eine ausserhalb des Rohrsystems angeordnete Steuer- und Überwachungseinheit weiterleitet. Mittels des Messrades 28 ist die genaue Position der Vorrichtung 10 im Rohr 14 bekannt.

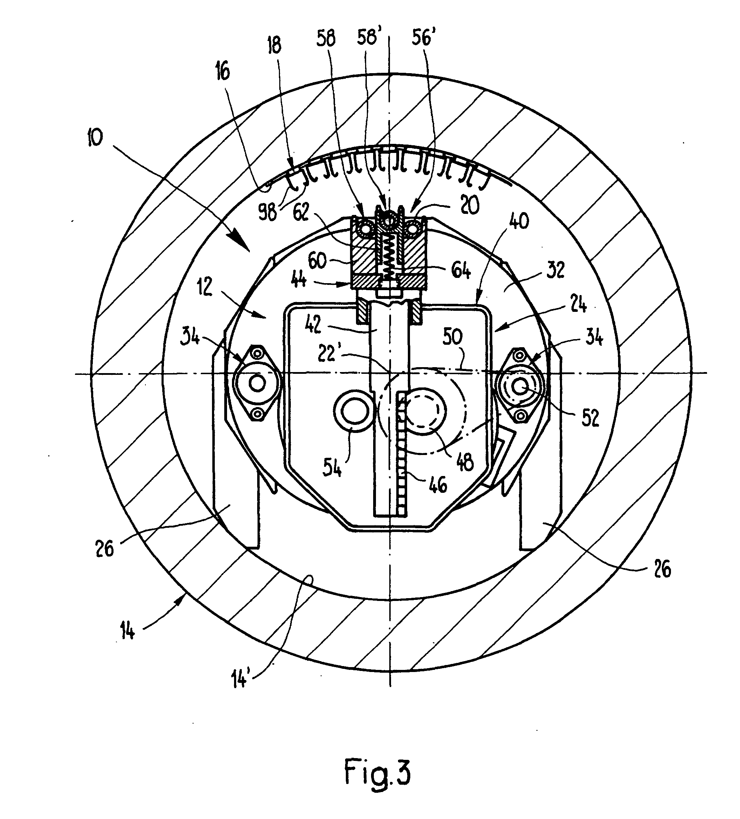

An der in Arbeitsrichtung A gesehen vorderen Stirnwand des Kanalroboterfahrzeugs 22 ist ein Drehteller 32 drehbar gelagert, welcher mittels eines im Kanalroboterfahrzeug 22 angeordneten Drehantriebs um die Längsachse 22' des Kanalroboterfahrzeugs in die gewünschte Drehlage schwenkbar ist. Wie dies insbesondere der Fig. 3 entnehmbar ist, sind am Drehteller 32 zueinander etwa diametral gegenüber zwei Abgangswellen 34 gelagert, die in bekannter Art und Weise mit je einem Antriebsaggregat im Innern des Kanalroboterfahrzeugs 22 verbunden sind. Weiter weist der Drehteller 32 Druckluft- und elektrische Steuer- und Signalanschlüsse 36 für die Arbeitseinheit 24 auf. Diese ist mittels eines Bajonettverschlusses 38 am Drehteller 32 wegnehmbar befestigt. Die genannten Anschlüsse 36 sind über das Speise- und Signalkabel mit ausserhalb des Rohrsystems angeordneten Speiseeinheiten bzw. mit der Steuer- und Überwachungseinheit verbunden.

Die Arbeitseinheit 24 weist im Anschluss an den Bajonettverschluss 38 auslegerartig ein Gehäuse 40 auf, in dem in der Längsmittelebene ein Schaft 42 in radialer Richtung verschiebbar gelagert ist, der an seinem über das Gehäuse 40 vorstehenden Ende einen Setzkopf 44 trägt. Im Innern des Gehäuses 40 ist ein Abschnitt des Schafts 42 als Zahnstange 46 ausgebildet, die mit einem am Gehäuse 40 gelagerten Stirnrad 48 zusammenwirkt. Dieses ist über einen Zahnriemen 50 mit einer Antriebswelle 52 verbunden, die seinerseits an eine der beiden Abgangswellen 34 des Drehtellers 32 angekoppelt ist. Durch Antrieb dieser Abgangswelle 34 mittels des betreffenden im Kanalroboterfahrzeug angeordneten Antriebsaggregats kann der Setzkopf 44 in radialer Richtung ein- und ausgefahren werden. Um die Zahnstange 36 mit dem Stirnrad 48 in Eingriff zu halten, ist diesem gegenüberliegend eine Stützrolle 54 vorgesehen.

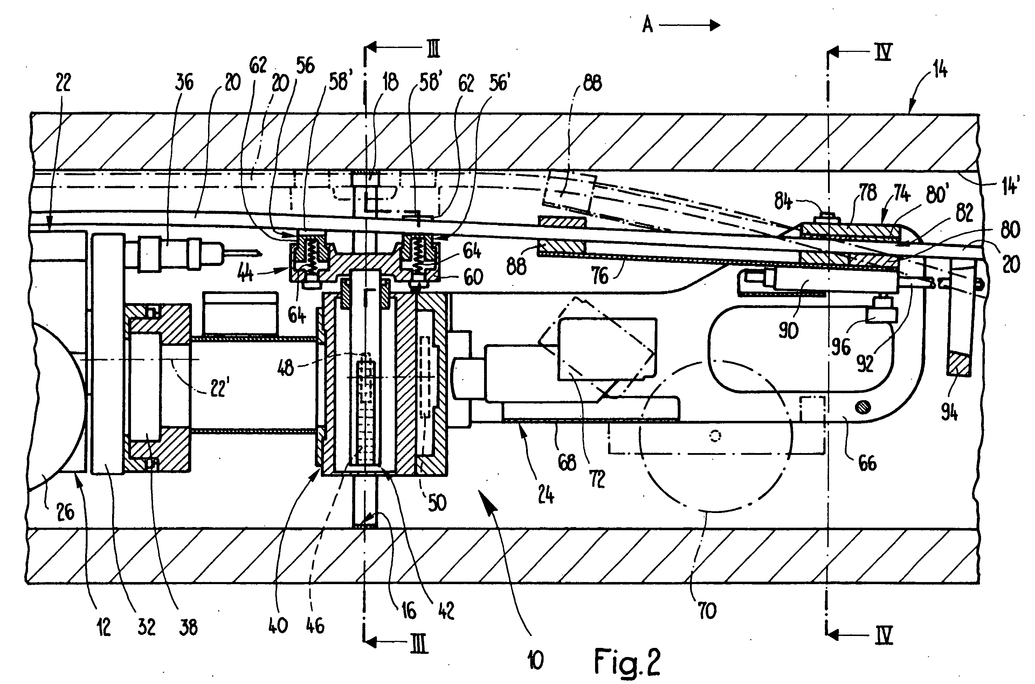

Der Setzkopf 44 weist zwei in Richtung der Längsachse 22' voneinander beabstandete Reihen 56, 56' von in Richtung der Längsachse verlaufenden Aufnahmenuten 58 auf, wobei die jeweils miteinander fluchtenden Aufnahmenuten 58 der beiden Reihen 56, 56' zur Aufnahme desselben Gegenstands 20 bestimmt sind. Im vorliegenden Fall weist jede Reihe 56, 56' drei in radialer Richtung gegen aussen offene Aufnahmenuten 58 auf, wobei die beiden aussenliegenden Aufnahmenuten 58 in einem am Schaft 42 befestigten Trägerkörper 60 des Setzkopfes 44 fest angeordnet sind und die jeweils mittlere Aufnahmenut 58' an einem fingerartig ausgebildeten Setzelement 62 ausgebildet ist, das wie in den Fig. 2 und 3 gezeigt, am Trägerkörper 60 in radialer Richtung verschiebbar und entgegen der Kraft einer Druckfeder 64 zurückdrängbar gelagert ist. Wie dies insbesondere aus der Fig. 3 hervorgeht, ist in Ruhelage des Setzelements 62 die betreffende Aufnahmenut 58' in radialer Richtung gesehen weiter aussen angeordnet als die beiden anderen Aufnahmenuten 58.

Auf der dem Kanalroboterfahrzeug 22 abgewandten Seite stehen vom Gehäuse 40 zwei parallele Schilder 66 ab, die im freien Endbereich über Distanzbügel 68 verbunden sind und über ein gegebenenfalls ein- und ausfahrbares Stützrad 70 an der Rohrinnenwand 14' abgestützt sein können. Zwischen den beiden Schildern 66 ist eine allgemein bekannte TV-Kamera 72 schwenkbar angeordnet, die über Signalleitungen mit der Steuer- und Überwachungseinheit verbunden ist. Sie dient insbesondere zur visuellen Steuerung und Überprüfung des Setzkopfes.

Im freien Endbereich der Schilder 66 ist eine wippenartig ausgebildete Führungseinrichtung 74 für die Gegenstände 20 angeordnet. An einem aus Blech mit seitlich aufgebogenem Randabschnitt geformten Tragbügel 76, der an den Schildern 66 um eine rechtwinklig zur Längsachse 22' verlaufende Achse 76' schwenkbar gelagert ist, ist bei der Achse 76' ein Rahmen 78 befestigt, in dem zwei Führungs- und Bremsplatten 80, 80' angeordnet sind. Diese begrenzen einen Führungsspalt 82 und weisen auf den einander zugewandten Seiten Führungsvertiefungen 82' für die Gegenstände 20 auf. Dadurch sind die drei Gegenstände 20 nebeneinander in definiertem Abstand gehalten und geführt. Weiter ist am Rahmen 78 pro Paar Führungsvertiefungen 82' eine Stellschraube 84 angeordnet, mittels welcher die Breite des Führungsspalts 82 bei der betreffenden Führungsvertiefung 82' einstellbar ist, um beim Bewegen der Vorrichtung 10 in Arbeitsrichtung A auf jeden Gegenstand 20 individuell eine Reibungskraft aufzubringen, um die Gegenstände 20 zu spannen bzw. gespannt zu halten. Die Führungs- und Bremsplatten 80, 80' bestehen vorzugsweise aus einem flexiblen Kunststoff, beispielsweise Nylon oder Teflon.

Am setzkopfseitigen Ende des hebelartig ausgebildeten Tragbügels 76 ist ein Führungskörper 88 befestigt, der mit drei Durchlässen für die Führung der Gegenstände 20 versehen ist. Die Führungsvertiefungen 82' und die Durchlässe im Führungskörper 88 sind auf die Aufnahmenuten 58, 58' abgestimmt.

Unter dem Tragbügel 76 sind an diesen weiter zwei Führungselemente 90 befestigt, die je von einer Stange 92 durchgriffen sind. An ihrem über die Schilder 66 vorstehenden Ende sind die Stangen 92 durch einen in Richtung gegen oben offenen, kreissegmentartigen Führungsbügel 94 miteinander verbunden. Durch diesen Führungsbügel 74 hindurch verlaufen, bei in Richtung vom Setzkopf 44 weg ausgezogenen Stangen 92, die Gegenstände 20. Die Stangen 92 können aus der in der Fig. 2 durch die unterbrochen gezeigten Stangen angedeuteten ausgefahrenen Stellung, nach Lösen der Befestigungsschrauben 96, in Richtung gegen das Kanalroboterfahrzeug 20' eingefahren werden, bis der Führungsbügel 94 sich bei den Führungselementen 90 befindet. Dadurch kann die Länge der Arbeitseinheit 24 für deren Einbringen in das oder Herausnehmen aus dem Rohr 14 durch einen Vertikalschacht erheblich verkleinert werden.

Mit ausgezogenen Linien ist in den Fig. 1 und 2 die Schwenklage der Führungseinrichtung 74 bei in Ruhelage abgesenktem Setzkopf 44 und noch nicht in die Klammern 18 eingeführten Gegenstände 20 gezeigt. Strichpunktiert ist der Setzkopf 44 in ausgefahrener Setzstellung sowie die entsprechende Schwenklage der Führungseinrichtung 74 angedeutet.

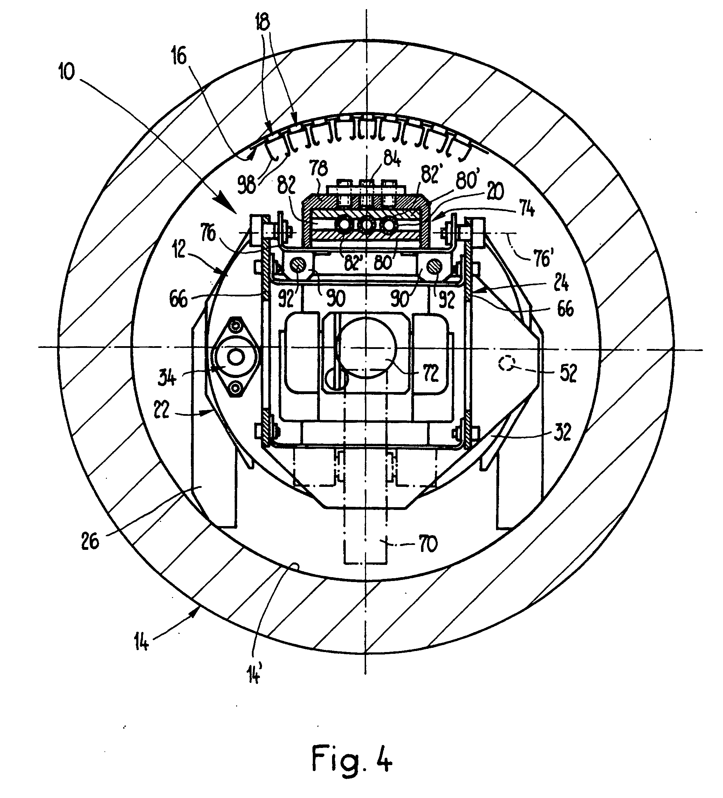

Wie dies den Fig. 3 und 4 entnehmbar ist, weisen die Klammern 18 zwei selbstfedernd ausgebildete Klammerzungen 98 auf, zwischen die je ein Gegenstand 20 eingesetzt werden kann. Es wird jeweils der mittlere der drei Gegenstände 20 zuerst in die zugeordnete Klammer 18 eingesetzt und erst nachher werden die beiden aussenliegenden Gegenstände 20 in die benachbarten Klammern 18 gleichzeitig eingesetzt. Da nun in zwei benachbarte Klammern 18 nicht gleichzeitig Gegenstände 20 eingesetzt werden, wird nur jeweils der Auslenkbereich der Klammerzungen 98 einer dieser Klammern 18 benötigt, was das sehr nahe beieinander Anordnen der Klammern 18 ermöglicht.

Nach dem Versetzen der die Klammern 18 tragenden Innenbriden 16 - beispielsweise mittels einer Vorrichtung wie sie in der EP-Patentanmeldung Nr. 98 102 681.8 offenbart ist - und dem Einzug der Gegenstände 20, wird, falls genügend Platz vorhanden ist, die gesamte Vorrichtung 10, beispielsweise mittels eines Kranes, in den Schacht hinuntergelassen, von dem das Rohr 14 weggeht. Falls nicht genügend Platz vorhanden ist, werden das Kanalroboterfahrzeug 22 und die Arbeitseinheit 24 getrennt in den Schacht hinuntergelassen und im Schacht mittels des Bajonettverschlusses 38 aneinander angebaut und die Anschlüsse 36 verbunden. Anschliessend werden die Gegenstände 20 in die Führungseinrichtung 74 sowie die Aufnahmenuten 58, 58' des Setzelements 62 eingelegt. Falls dies nicht mit dem Ende der Gegenstände 20 geschehen kann - in diesem Fall können die Gegenstände 20 in den Führungsspalt 82 und in den Führungskörper 88 eingeführt werden - kann die Führungseinrichtung 74 derart ausgebildet sein, dass sowohl der Führungskörper 88 als auch der Führungsspalt 82 geöffnet werden kann, um die Gegenstände 20 einzulegen.

Nach der Beendigung dieser vorbereitenden Arbeiten wird die Vorrichtung 10 durch das Kanalroboterfahrzeug 22 angetrieben, mit der Arbeitseinheit 24 voraus, in Arbeitsrichtung A in das Rohr 14 ferngesteuert eingefahren, bis der Setzkopf 44 die erste Innenbride 16 mit den Klammern 18 erreicht hat. Zum Feststellen dieser Position dienen das Messrad 28 als auch die TV-Kamera 72. Durch Drehen des Drehtellers 32 wird die Arbeitseinheit 24 in die gewünschte Drehlage verbracht, was wiederum unter Zuhilfenahme der TV-Kamera 72 ferngesteuert erfolgt. Dann wird der Setzkopf 44 aus seiner Ruhelage in radialer Richtung gegen aussen verfahren, wodurch der mittlere der drei Gegenstände 20 zuerst in die betreffende Klammer 18 eingesetzt wird. Wie dies aus den Fig. 1 und 2 hervorgeht, sind dabei die Klammern 18 zwischen den beiden Reihen 56, 56' von Aufnahmenuten 58, 58' angeordnet. Dies verhindert ein Verbiegen der Gegenstände 20 beim Einführen in die selbstschliessenden Klammern 18. Nachdem der mittlere Gegenstand 20 in die betreffende Klammer 18 eingesetzt ist, wird der Setzkopf 44 zum Einlegen der beiden aussenliegenden Gegenstände 20 in die betreffenden Klammern 18 weiter in radialer Richtung ausgefahren, was zur Folge hat, dass das Setzelement 62 entgegen der Kraft der Druckfeder 64 in den Trägerkörper 60 zurückgedrängt wird. Um dabei die Beschädigung des betreffenden Gegenstandes 20 zu vermeiden, stehen die Flanken des Setzelements 62 über den betreffenden Gegenstand 20' vor, so dass diese an der Rohrinnenwand 14' zur Anlage gelangen können und somit unmittelbar vom Rohr 14 und nicht mittelbar über den Gegenstand 20 zurückgedrängt wird. Selbstverständlich ist die Druckfeder 64 derart ausgebildet, dass ihre auf das Setzelement 62 ausgeübte Kraft grösser ist als die Kraft die benötigt wird, um den betreffenden Gegenstand 20 in die Klammer 18 einzusetzen.

Nachdem die drei Gegenstände 20 in die Klammern 18 eingesetzt sind, wird der Setzkopf 44 wiederum in radialer Richtung eingefahren, wobei die Aufnahmenuten 58, 58' die Gegenstände 20 verlassen, die dabei die in den Fig. 1 und 2 strichpunktiert angedeutete Lage beibehalten. Nach einer Kontrolle mittels der Fernsehkamera 72 wird die Vorrichtung 10 in Arbeitsrichtung A bis zur nächstfolgenden Innenbride 16 verfahren. Dabei wird auf die Gegenstände 20 infolge der Wirkung der Führungs- und Bremsplatten 80, 80' eine Zugkraft aufgebracht und werden jene gestreckt gehalten, falls es sich um Gegenstände 20 mit kleiner Eigenstabilität handeln sollte. Im Zuge dieser Vorwärtsbewegung wird nach und nach infolge des Gewichts der Gegenstände 20 die Führungseinrichtung 74 entgegen dem Uhrzeigersinn verschwenkt, wodurch die parallel nebeneinander gehaltenen Gegenstände 20 wiederum mit den betreffenden Aufnahmenuten 58, 58' in Eingriff gelangen, wobei dies zuerst mit dem mittleren Gegenstand 20 geschieht. Anschliessend werden in gleicher Art und Weise die Gegenstände 20 in die Klammern 18 eingesetzt. Diese Arbeitsschritte wiederholen sich, bis das Rohrende bzw. der nächste Schacht erreicht ist.

Im gezeigten Beispiel weisen die Innenbriden 16 je neun Klammern 18 auf. Dabei werden in bevorzugter Weise zuerst die mittleren drei Klammern 18 mit Gegenständen 20 belegt. Allfällige weitere Gegenstände 30 werden dann, bis zu drei miteinander, in die Klammern auf der einen oder anderen Seite eingesetzt.

Selbstverständlich ist es auch möglich mit der gezeigten Vorrichtung nur einen oder zwei Gegenstände 20 in die Klammern 18 einzulegen.

Falls ein Stützrad 70 vorgesehen wird, kann es an der Arbeitseinheit 24 auch fest angeordnet sein. Um das Drehen der Arbeitseinheit 24 um die Längsachse 22' zu ermöglichen, ist es aber mit Vorteil von der Rohrinnenwand 14' beabstandet, so dass es nur beim Einsetzen der Gegenstände 20 in die Klammern 18 zum Abstützen an der Rohrinnenwand 14' zur Anlage gelangen kann.

Bevorzugte Innenbriden 16 mit Klammern 18 sind in der EP-A-0 936 479 offenbart. Selbstverständlich kann die vorliegende Vorrichtung aber auch eingesetzt werden, um langgestreckte Gegenstände in Klammern einzusetzen, die direkt am Rohr befestigt sind.

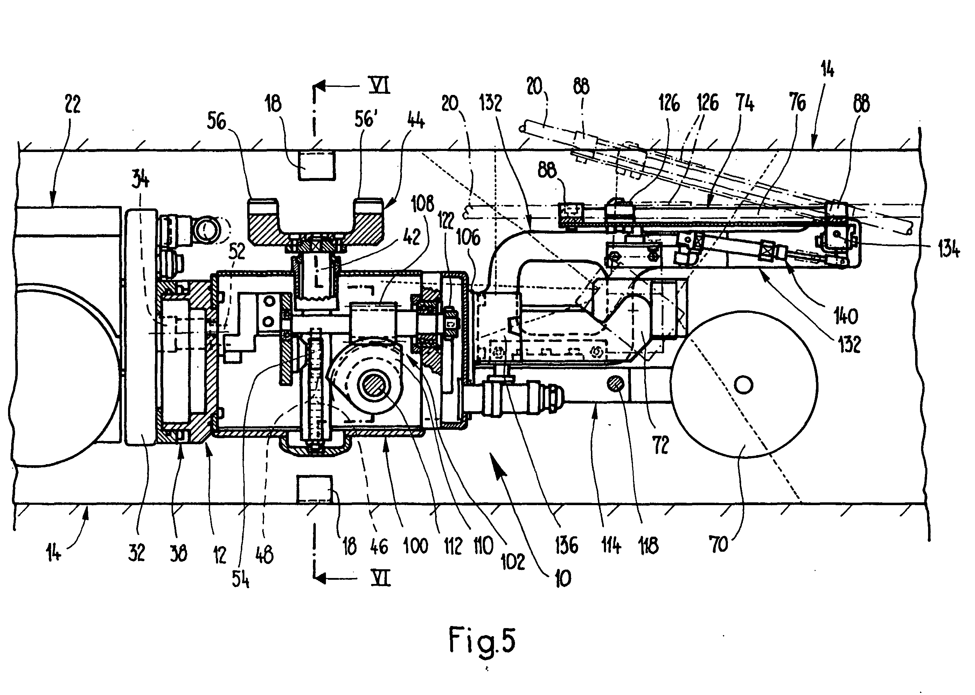

In den Figuren 5 bis 13 ist ein weiteres Ausführungsbeispiel der Vorrichtung 10 gezeigt, wobei miteinander vergleichbare Teile wieder mit den gleichen Bezugszeichen versehen sind. Diese Vorrichtung 10 weist gegenüber der zuvor beschriebenen ein wesentlich kleineres Kippmoment auf.

Dazu umfasst das fahrbare Gestell 12 einen an den Drehteller 32 des selbstfahrenden Kanalroboterfahrzeugs 22 ansetzbaren Hauptmodul 100, in dem die erforderlichen Elektronikkomponenten, Pneumatik- oder Hydraulik-Ventile, der Antrieb 46, 48 zum Bewegen des Setzkopfes 44 und der Schwenkantrieb 102 für ein Stützrad 70 angeordnet sind.

Dieser Hauptmodul ist unabhängig vom Durchmesser des nichtbegehbaren Rohres 14 stets gleich.

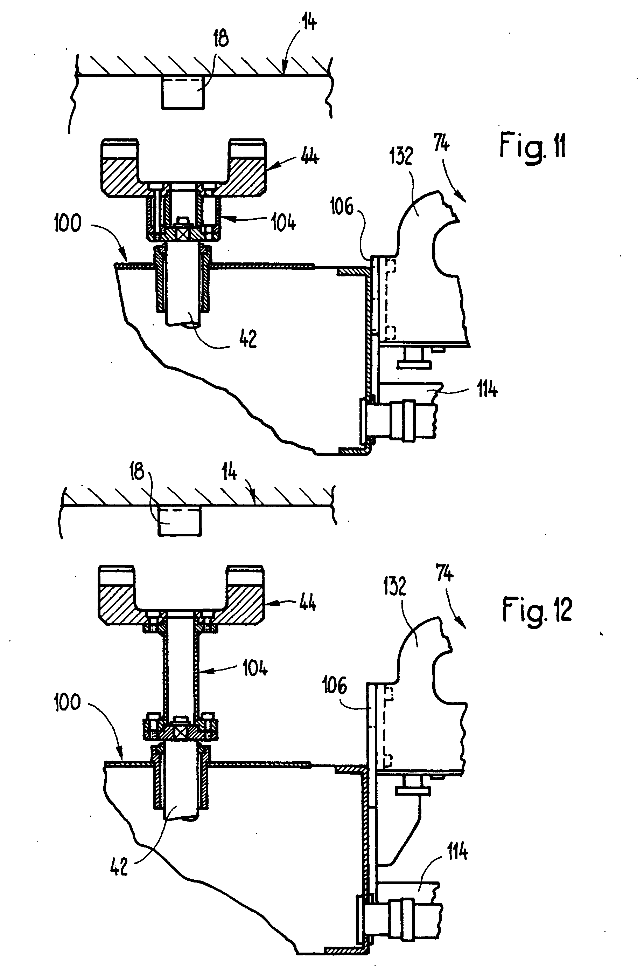

Zur Anpassung der Vorrichtung 10 an unterschiedliche Durchmesser des nichtbegehbaren Rohres 14 sind der Setzkopf 44 und die Führungseinrichtung 74 über Adapter 104 (vgl. Figuren 11 bis 13) bzw. 106 (vgl. auch die Figur 5) mit dem Hauptmodul 100 koppelbar. Durch diese zwischen dem Setzkopf 44 und dem Schaft 42 einerseits sowie zwischen der Führungseinrichtung 74 und dem kastenartigen Gehäuse des Hauptmoduls 100 andererseits einsetzbaren Adapter 104 bzw. 106 können der Setzkopf 44 und die Führungseinrichtung 74 entsprechend dem Durchmesser des jeweiligen nichtbegehbaren Rohres 14 in radialer Richtung versetzt werden. Zudem ist die Spurweite des selbstfahrenden Kanalroboterfahrzeugs 22 entsprechend dem Durchmesser des nichtbegehbaren Rohres 14 einstellbar. Dabei ist zweckmässigerweise dafür gesorgt, dass mit einer entsprechenden Einstellung die Längsachse des selbstfahrenden Kanalroboterfahrzeugs 22 zumindest im wesentlichen mit der Längsachse des nichtbegehbaren Rohres 14 zusammenfällt. Schliesslich ist das Stützrad 70 entsprechend dem jeweiligen Durchmesser des nichtbegehbaren Rohres 14 einund ausschwenkbar.

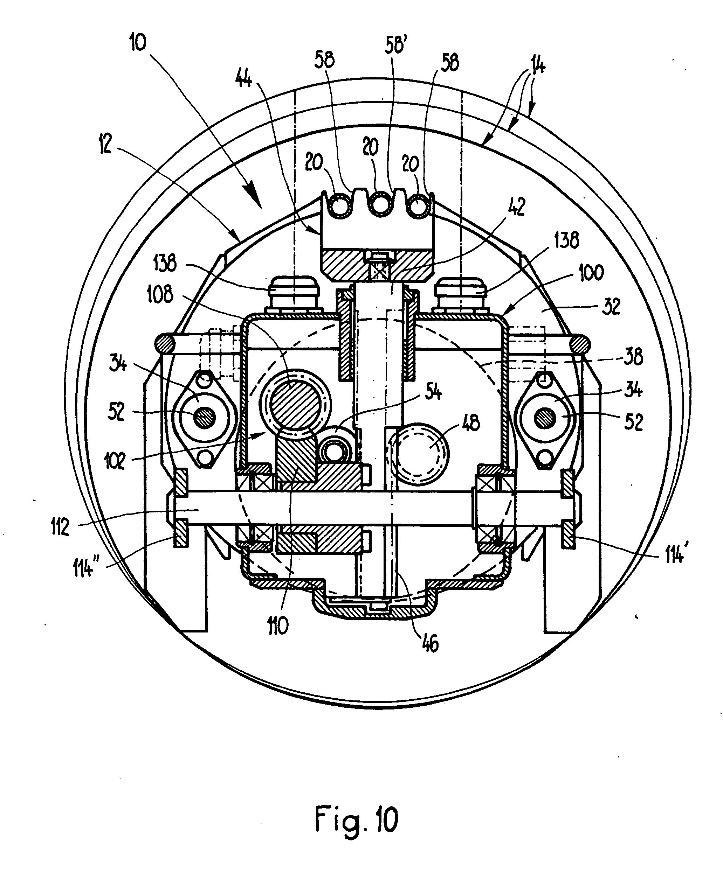

Insbesondere in der Figur 10 sind auch wieder die mit den beiden Abgangswellen 34 des Drehtellers 32 gekoppelten Antriebswellen 52 erkennbar. Über eine der beiden Abgangswellen 34 des Drehtellers 32 wird wieder der Setzkopf 44 ein- und ausgefahren. Die andere Abgangswelle 34 dient dem Ein- und Ausschwenken des Stützrades 70 (vgl. insbesondere auch die Figuren 5 bis 7).

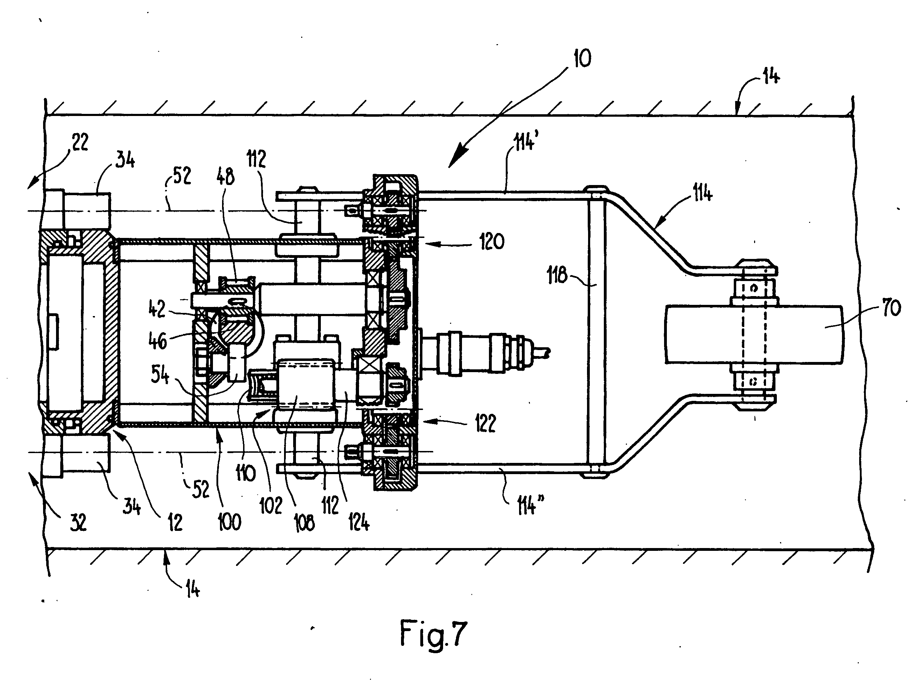

Das Ein- und Ausschwenken des Stützrades 70 erfolgt über das Schnekkengetriebe 102 (vgl. insbesondere die Figuren 5, 7 und 10), wobei eine von der betreffenden Abgangswelle 34 angetriebene Schnecke 108 mit einem Schneckenradsegment 110 kämmt, das drehfest auf einer am Gehäuse des Hauptmoduls 100 gelagerten Welle 112 sitzt. Wie am besten anhand der Figur 7 zu erkennen ist, ist das Stützrad 70 an einem Ende eines im vorliegenden Fall zweischenkligen Trägers 114 drehbar gelagert, dessen beide Schenkel 114' und 114" am anderen Ende an den aus dem Gehäuse des Hauptmoduls 100 heraustretenden Enden der Welle 112 befestigt sind. Die beiden Schenkel 114' und 114" des Trägers 114 sind über wenigstens eine Querstrebe 118 miteinander verbunden.

Der Antrieb zum Bewegen des Setzkopfes 44 umfasst wieder einen als Zahnstange 46 ausgebildeten Abschnitt des Schaftes 42 sowie ein am Gehäuse des Hauptmoduls 100 gelagertes, mit der Zahnstange 46 zusammenwirkendes Zahnrad 48 (vgl. insbesondere die Figuren 5, 7 und 10). Um die Zahnstange 36 mit dem Zahnrad 48 in Eingriff zu halten, ist diesem gegenüberliegend auch wieder eine Stützrolle 54 vorgesehen. Im vorliegenden Fall ist das Zahnrad 48 jedoch nicht mehr über einen Zahnriemen, sondern über ein Zahnradgetriebe 120 mit der betreffenden Antriebswelle 52 verbunden. Ein entsprechendes Zahnradgetriebe 122 ist auch zwischen der die Schnecke 108 tragenden Welle 124 und der anderen Antriebswelle 52 vorgesehen.

Im übrigen erfolgt das Ein- und Ausfahren des Setzkopfes 44 auf die gleiche Art und Weise wie bei dem zuvor beschriebenen Ausführungsbeispiel.

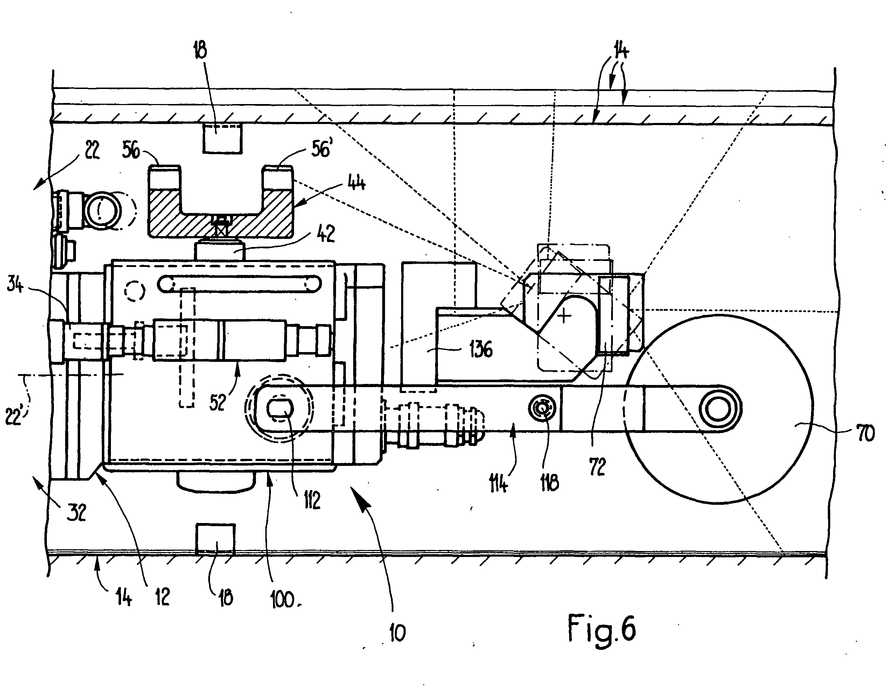

Wie insbesondere anhand der Figuren 6 und 10 zu erkennen ist, weist der Setzkopf 44 wieder zwei in Richtung der Längsachse 22' voneinander beabstandete Reihen 56, 56' von in Richtung der Längsachse verlaufenden Aufnahmenuten 58 auf, wobei die jeweils miteinander fluchtenden Aufnahmenuten 58 der beiden Reihen 56 und 56' zur Aufnahme desselben Gegenstandes 20 bestimmt sind. Wie anhand der Figur 10 zu erkennen ist, ist im vorliegenden Fall auch die mittlere Aufnahmenut 58 einer jeweiligen Nutenreihe fest am Setzkopf 44 angeordnet. Demzufolge werden alle drei Gegenstände 20 wie beispielsweise Kabel oder Schutzrohre für Kabel gleichzeitig in die jeweils benachbarten Klammern 18 (vgl. insbesondere Figuren 5 und 6) eingesetzt. Um dies zu ermöglichen, sind diese Klammern 18 im vorliegenden Fall entsprechend weiter voneinander beabstandet.

Beim vorliegenden Ausführungsbeispiel fehlt zudem der beim zuvor beschriebenen Ausführungsbeispiel vorgesehene Führungsbügel 94.

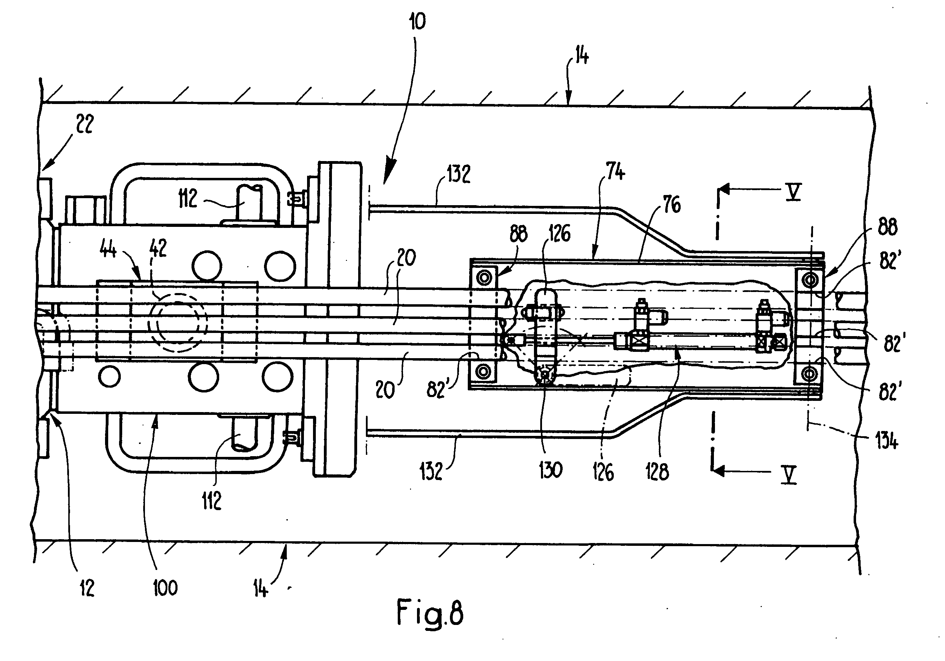

Die Führungseinrichtung 74 umfasst lediglich noch zwei Führungskörper 88 mit jeweils drei nebeneinander angeordneten Nuten 82' für die beispielsweise durch Schutzrohre oder Lichtquellenleiterkabel gebildeten Gegenstände 20 (vgl. insbesondere die Figuren 5 und 8).

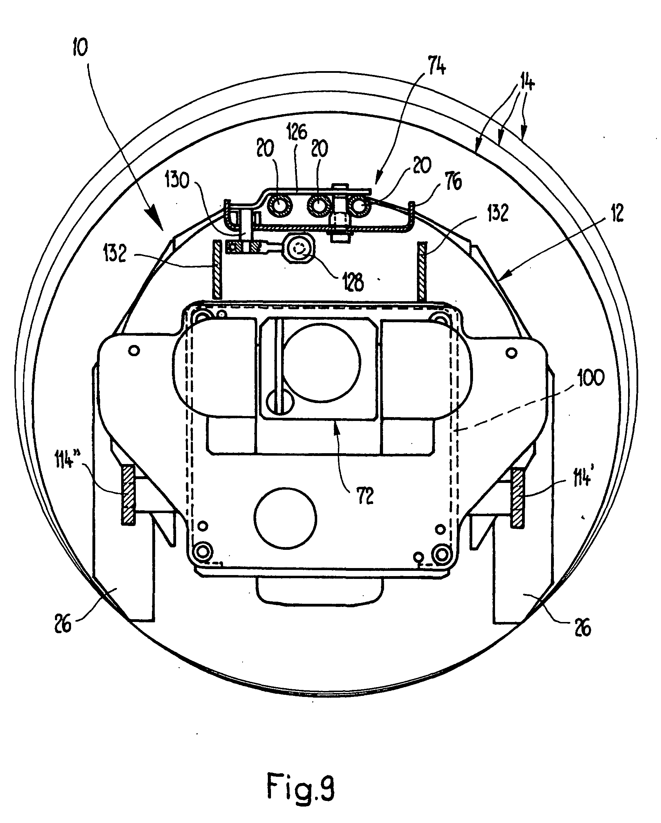

Wie insbesondere den Figuren 5, 8 und 9 entnommen werden kann, ist der Führungseinrichtung 74 ein Führungshebel 126 zugeordnet, der im Bereich der dem Setzkopf 44 näher gelegenen Führungskörper 88 angeordnet und mittels einer Zylinder/Kolben-Einheit 128 zwischen einer Halteposition, in der die Gegenstände 20 zumindest im wesentlichen in den Nuten 82' der Führungskörper 88 gehalten oder vom Führungshebel 126 übergriffen sind, und einer Freigabeposition verstellbar ist, in der die Gegenstände 20 freigegeben sind. Wie am besten den Figuren 8 und 9 entnommen werden kann, kann der Führungshebel 126 hierzu um eine zur Längsachse 22' senkrechte Achse 130 im wesentlichen um 90° verschwenkt werden. In der Halte- oder Führungsposition des Führungshebels 126 wird somit verhindert, dass die Gegenstände 20 aus den Nuten 82' der Führungskörper 88 austreten.

Ist beispielsweise bei aufkommendem Hochwasser der Roboter aus dem nichtbegehbaren Rohr 14 auszufahren, so wird der Führungshebel 126 um die Achse 130 in die Freigabeposition verschwenkt, in der die beispielsweise durch Schutzrohre oder Lichtwellenleiterkabel gebildeten Gegenstände 20 freigegeben ist, so dass der Roboter nunmehr in beiden Richtungen frei bewegbar ist. Zudem vereinfacht der Führungshebel 126 das Einführen der insbesondere rohr- oder kabelartigen Gegenstände in die Nuten 82' der Führungskörper 88 beim Vorbereiten des Roboters für die Montage.

Wie insbesondere den Figuren 5 und 8 entnommen werden kann, umfasst die Führungseinrichtung 74 einen eine Art Wippe 76 bildenden Tragbügel, der schwenkbar an einem mit dem Hauptmodul 100 koppelbaren Grundkörper 132 (vgl. insbesondere Figur 5) gelagert ist. Dieser Grundkörper 132 bleibt ebenso wie der Hauptmodul 100 unabhängig vom jeweiligen Durchmesser des nichtbegehbaren Rohres 14 gleich.

Ist der der Wippe 76 zugeordnete Führungshebel 126 in seine Freigabestellung verschwenkt, so wird die zudem die Führungskörper 88 aufweisende, um die Achse 134 schwenkbare Wippe infolge ihres Gewichtes selbsttätig nach unten von den Gegenständen weggeschwenkt.

Es hat sich gezeigt, dass zum Spannen von Schutzrohren keine Bremseinrichtung erforderlich ist. In diesem Fall kann somit die im Zusammenhang mit dem vorangehenden Ausführungsbeispiel beschriebene Bremseinrichtung entfallen. Die Verwendung einer solchen Bremseinrichtung kann allerdings beispielsweise beim Verlegen von Kabeln zweckmässig sein.

Wie sich insbesondere aus den Figuren 5, 6 und 9 ergibt, ist auch im vorliegenden Fall wieder eine um eine zur Längsachse 22' (vgl. Figur 6) senkrechte Achse schwenkbare Farbfernsehkamera 72 vorgesehen. Diese ist im vorliegenden Fall in dem Grundkörper 132 entsprechend schwenkbar gelagert. Darüber hinaus ist im vorliegenden Fall zusätzlich eine fest angeordnete, in radialer Richtung ausgerichtete Schwarz-Weiss-Kamera 136 (vgl. insbesondere Figur 5) vorgesehen. Diese Schwarz-Weiss-Kamera 136 kann insbesondere dazu dienen, Einläufe in das nichtbegehbare Rohr 14 und Rohrversätze sowie in dem nichtbegehbaren Rohr 14 gesetzte Briden zu erkennen. Wurde beispielsweise eine solche Bride erkannt, so wird der Roboter noch um die Strecke zwischen der Schwarz-Weiss-Kamera 136 und dem zum Setzen der Briden verwendeten Setzkopf 44 vorwärts bewegt, so dass dieser Setzkopf 44 symmetrisch zur betreffenden Bride zu liegen kommt.

Wie am besten anhand der Figur 10 zu erkennen ist, sind beidseitig des Setzkopfes 44 am Gehäuse des Hauptmoduls 100 Laserpointer 138 angeordnet, die insbesondere als Zielvorrichtung zum genauen Positionieren einer jeweiligen Bride bzw. der Klammern 18 dienen kann. In der Figur 10 sind die erzeugten, zueinander parallelen Laserstrahlen strichpunktiert angedeutet.

Die mit den Führungskörpern 88 versehene, um die Achse 134 schwenkbar am Grundkörper 132 gelagerte Wippe 76 ist im vorliegenden Fall über wenigstens eine Zylinder/Kolben-Einheit 140 bezüglich des Grundkörpers 132 verschwenkbar. Die Wippe 36 kann somit beispielsweise bei einer anstehenden Evakuation des Roboters zwangsweise eingeschwenkt werden.

Bei der vorliegenden Ausführungsform können somit unabhängig vom jeweiligen Durchmesser des unbegehbaren Rohres stets das gleiche selbstfahrende Kanalroboterfahrzeug 22, der gleiche Hauptmodul 100 und die gleiche, im vorliegenden Fall die Wippe 76 sowie den Grundkörper 132 mit den Kameras 72 und 136 umfassende Führungseinrichtung verwendet werden. Zur Anpassung des Roboters an unterschiedliche Durchmesser des nichtbegehbaren Rohres 14 werden der Setzkopf 44 und die Führungseinrichtung 74 über entsprechende Adapter 104, 106 und/oder eine entsprechende Anzahl von Adaptern mit dem Hauptmodul 100 gekoppelt. Zudem wird das Stützrad 70 entsprechend dem jeweiligen Durchmesser des nichtbegehbaren Rohres 14 ein- bzw. ausgeschwenkt. Zudem kann die Spurweite des selbstfahrenden Kanalroboterfahrzeugs 22 entsprechend dem jeweiligen Rohrdurchmesser eingestellt werden.

In der Figur 5 ist der Roboter in seiner Grundausstattung für nichtbegehbare Rohre 14 mit einem Innendurchmesser von beispielsweise 300 mm dargestellt. In diesem Fall ist kein Adapter zwischen dem Setzkopf 44 und dem Schaft 42 erforderlich. Die Führungseinrichtung 74 ist über eine relativ kleine Adapterplatte 106 am Gehäuse des Hauptmoduls 100 befestigt. Diese Adapterplatte 106 kann nun je nach dem Innendurchmesser des nichtbegehbaren Rohres 104 unterschiedlich ausgebildet sein. So können beispielsweise auch Adapter für weitere Rohrinnendurchmesser von beispielsweise 350 mm, 400 mm, 450 mm, 500 mm und/oder 600 mm vorgesehen sein. Grundsätzlich sind jedoch auch Adapter für andere Rohrinnendurchmesser denkbar. Die Figuren 11 bis 13 zeigen Seitenansicht eines Teils der Vorrichtung gemäss Figur 5 mit Adaptern 104 und 106 zur Anpassung an weitere unterschiedliche Innendurchmesser des nichtbegehbaren Rohres 14.

So zeigt die Figur 11 den Roboter in einer Ausstattung für nichtbegehbaren Rohre 14, deren Innendurchmesser beispielsweise etwa 350 mm beträgt. Wie bereits erwähnt sind grundsätzlich jedoch auch andere Durchmesser denkbar. Gemäss dieser Figur 11 ist zwischen dem Setzkopf 44 und dem in dem Hauptmodul 100 gelagerten Schaft 42 ein rohrartig ausgebildeter Adapter 104 eingesetzt. Der Grundkörper 134 der Führungseinrichtung 74 ist über eine Adapterplatte 106 an dem Gehäuse des Hauptmoduls 100 befestigt, die etwas grösser als bei der Ausstattung gemäss Figur 5 ist und im vorliegenden Fall bereits etwas nach oben über das Gehäuse des Hauptmoduls 100 vorsteht.

Im Vergleich zu der in der Figur 5 dargestellten Grundausstattung sind somit im vorliegenden Fall der Setzkopf 44 sowie die Führungseinrichtung 74 bezüglich des Hauptmoduls 100 radial weiter nach aussen versetzt.

Figur 12 zeigt eine Ausstattung des Roboters, die für nichtbegehbare Rohre von etwas grösserem Innendurchmesser, hier beispielsweise 450 mm, ausgelegt ist. Entsprechend ist zwischen dem Setzkopf 44 und dem in dem Hauptmodul 100 gelagerten Schaft 42 ein entsprechend längerer rohrartiger Adapter 104 eingesetzt. Der der Führungseinrichtung 74 zugeordnete Grundkörper 134 ist über eine entsprechend grössere Adapterplatte 106 am Gehäuse des Hauptmoduls 100 befestigt. Wie anhand eines Vergleichs der Figur 12 mit der Figur 11 zu erkennen ist, sind im vorliegenden Fall der Setzkopf 44 sowie die Führungseinrichtung 74 bezüglich des Hauptmoduls 100 ein entsprechendes Stück weiter radial nach aussen versetzt.

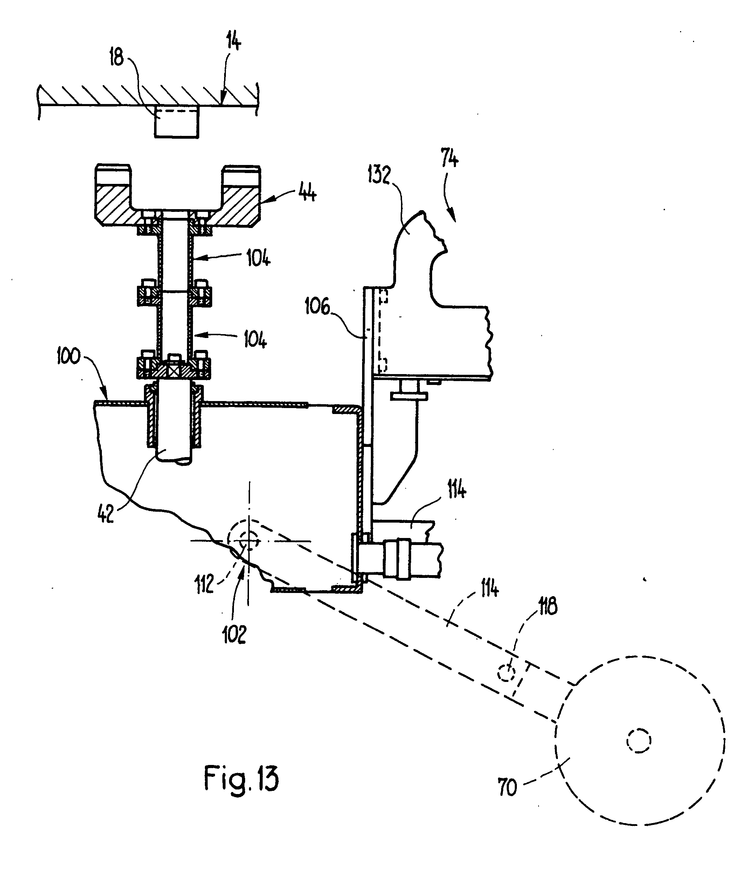

Figur 13 zeigt eine Ausstattung des Roboters für nichtbegehbare Rohre von einem noch grösseren Innendurchmesser, im vorliegenden Fall beispielsweise 600 mm. In diesem Fall sind zwischen dem Setzkopf 44 und dem im Hauptmodul 100 gelagerten Schaft 42 zwei rohrförmige Adapter 104 eingesetzt. Der der Führungseinrichtung 74 zugeordnete Grundkörper 135 ist über eine noch grössere Adapterplatte 106 am Gehäuse des Hauptmoduls 100 befestigt. Entsprechend sind im vorliegenden Fall der Setzkopf 44 sowie die Führungseinrichtung 74 bezüglich des Hauptmoduls 100 ein weiteres Stück radial nach aussen versetzt.

In dieser Figur 13 ist zudem gestrichelt das nach unten verschwenkte Stützrad 70 erkennbar. Dabei können die Adapter 104, 106 sowie die Einstellungen insbesondere so gewählt sein, dass die Mittelachse 22' des Roboters mit der Mittelachse des nichtbegehbaren Rohres 14 zumindest im wesentlichen zusammenfällt.

Die rohrförmigen Adapter 104 zwischen dem Setzkopf 44 und dem Schaft 42 können beispielsweise entsprechend der Abstufung der üblichen Nennweiten der Rohre 14 eine Länge von beispielsweise zwischen etwa 25,5 und etwa 75 mm aufweisen. Insbesondere für grössere Nennweiten können auch zwei oder mehrere Adapter miteinander kombiniert werden. Dabei können die miteinander kombinierten Adapter eine gleiche Länge besitzen oder auch zumindest teilweise unterschiedlich lang sein.

Im übrigen kann die anhand der Figuren 5 bis 13 beschriebene Ausführungsform zumindest im wesentlichen den gleichen Aufbau wie die zuvor beschriebene Ausführungsform besitzen.

## Patentansprüche

1. Vorrichtung zum Einsetzen von langgestreckten Gegenständen (20), wie Kabel oder Rohre, in Klammern (18), die im Innern eines nichtbegehbaren Rohres (14) angeordnet sind, mit einem an der Rohrinnenwand (14') in Rohrlängsrichtung (R) beweglich abstützbaren Gestell (12), einem am Gestell (12) bezüglich dessen Längsachse (22') radial bewegbar angeordneten Setzkopf (44), der eine wenigstens annähernd in Richtung der Längsachse (22') verlaufende, in radialer Richtung gegen aussen offene Aufnahmenut (58,58') für einen Gegenstand (20) aufweist, und einem Antrieb (46,48) zum Bewegen des Setzkopfes (44) in radialer Richtung, **dadurch gekennzeichnet, dass** der Setzkopf (44) mindestens zwei nebeneinander angeordnete, parallele Aufnahmenuten (58,58') für je einen Gegenstand (20) aufweist.

2. Vorrichtung nach Anspruch 1, **dadurch gekennzeichnet, dass** eine der Aufnahmenuten (58') in radialer Richtung weiter aussen als die andere Aufnahmenut (58) und in einem in radialer Richtung, vorzugsweise entgegen einer Federkraft (64) zurückdrängbaren Setzelement (62) angeordnet ist.

3. Vorrichtung nach Anspruch 2, **dadurch gekennzeichnet, dass** in Umfangsrichtung gesehen auf jeder Seite des Setzelements (62) wenigstens eine Aufnahmenut (58) angeordnet ist.

4. Vorrichtung nach Anspruch 2 oder 3, **dadurch gekennzeichnet, dass** der Setzkopf (44) zwei in Richtung der Längsachse (22') beabstandete Reihen (56,56') von Aufnahmenuten (58,58') aufweist.

5. Vorrichtung nach einem der Ansprüche 1 bis 4, **dadurch gekennzeichnet, dass** das Gestell (12) ein selbstfahrendes Kanalroboterfahrzeug (22) mit einer Dreheinrichtung (32) zum Drehen des Setzkopfes (44) um die Längsachse (22') aufweist.

6. Vorrichtung nach einem der Ansprüche 1 bis 5, **dadurch gekennzeichnet, dass** am Gestell (12), in Arbeitsrichtung (A) zum Einsetzen der Gegenstände (20) gesehen, bezüglich des Setzkopfes (44) vorlaufend eine Führungseinrichtung (74) zum auf die Aufnahmenuten (58,58') ausgerichteten wenigstens annähernd parallelen Führen der Gegenstände (20) angeordnet ist.

7. Vorrichtung nach Anspruch 6, **dadurch gekennzeichnet, dass** die Führungseinrichtung (74) eine, vorzugsweise für jeden Gegenstand (20) individuell einstellbare Reibungsbremse (80,80') aufweist.

8. Vorrichtung nach einem der vorhergehenden Ansprüche **dadurch gekennzeichnet, dass** der Antrieb (46, 48) zum Bewegen des Setzkopfes (44) in einem an die Dreheinrichtung (32) des selbstfahrenden Kanalroboterfahrzeuges (22) ansetzbaren Hauptmodul (100) untergebracht ist und dass der Setzkopf (44) und die Führungseinrichtung (74) jeweils über wenigstens einen Adapter (104, 106) mit dem Hauptmodul (100) koppelbar ist.

9. Vorrichtung nach Anspruch 8, **dadurch gekennzeichnet, dass** in dem Hauptmodul (100) zusätzlich der Schwenkantrieb (102) für ein Stützrad (70) untergebracht ist.

10. Vorrichtung nach Anspruch 8 oder 9, **dadurch gekennzeichnet, dass** in dem Hauptmodul (100) zumindest ein Teil der erforderlichen Elektronikkomponenten, Pneumatikventile und/oder Hydraulikventile untergebracht ist.

11. Vorrichtung nach Anspruch 9 oder 10, **dadurch gekennzeichnet, dass** das Stützrad (70) entsprechend dem jeweiligen Durchmesser des nichtbegehbaren Rohres (14) ein- und ausschwenkbar ist.

12. Vorrichtung nach einem der Ansprüche 6 bis 11, **dadurch gekennzeichnet, dass** der Führungseinrichtung (74) wenigstens ein Führungshebel (126) zugeordnet ist, der zwischen einer Halteposition, in der die Gegenstände (20) in der Führungseinrichtung (74) gehalten sind, und einer Freigabeposition verstellbar ist, in der die Gegenstände (20) freigegeben sind.

13. Vorrichtung nach einem der Ansprüche 6 bis 12, **dadurch gekennzeichnet, dass** die Führungseinrichtung (74) eine mit Führungselementen (88) versehene Wippe (76) umfaßt, die schwenkbar an einem mit dem Hauptmodul (100) koppelbaren Grundkörper (132) gelagert ist.

14. Vorrichtung nach Anspruch 13, **dadurch gekennzeichnet, dass** die mit Führungselementen (88) versehene Wippe (76) über wenigstens eine Zylinder/Kolben-Einheit (140) bezüglich des Grundkörpers (132) verschwenkbar ist.

15. Vorrichtung nach einem der Ansprüche 5 bis 14, **dadurch gekennzeichnet, dass** die Spurweite des selbstfahrenden Kanalroboterfahrzeugs (22) entsprechend dem Durchmesser des nichtbegehbaren Rohres (14) einstellbar ist.

## Claims

1. Device for inserting elongated objects (20) such as cables or pipes into clamps (18) which are arranged inside an inaccessible pipe (14), with a cradle (12) which can be supported on the pipe inner wall (14') so as to be movable in the longitudinal direction (R) of the pipe; a placing head (44) which is arranged on the cradle (12) so as to be movable radially with respect to the longitudinal axis (22') of the cradle and has a groove (58, 58') open radially outwards and running at least approximately in the direction of the longitudinal axis (22'), to receive an object (20); and a drive (46, 48) for shifting the placing head (44) in the radial direction; **characterized in that** the placing head (44) has at least two locating grooves (58, 58'), each for one object (20), arranged parallel and side by side.

2. Device according to Claim 1, **characterized in that** one of the locating grooves (58') is arranged radially further out than the other locating groove (58) and in a placing element (62) which can be forced back in the radial direction, preferably against the action of a spring (64).

3. Device according to Claim 2, **characterized in that** at least one locating groove (58) is arranged on either side of the placing element (62), viewed in the circumferential direction.

4. Device according to Claim 2 or Claim 3, **characterized in that** the placing head (44) has two rows (56, 56') of locating grooves (58, 58') spaced apart in the direction of the longitudinal axis (22').

5. Device according to any one of Claims 1 to 4, **characterized in that** the cradle (12) has a self-propelled conduit robot vehicle (22) with a rotating device (32) for rotating the placing head (44) about the longitudinal axis (22').

6. Device according to any one of Claims 1 to 5, **characterized in that** a guiding device (74) for guiding the objects (20) at least approximately parallel in alignment with the locating grooves (58, 58') is arranged on the cradle (12), in front of the placing head (44), viewed in the working direction (A) for the insertion of articles (20).

7. Device according to Claim 6, **characterized in that** the guiding device (74) has a friction brake (80, 80') which is preferably individually adjustable for each object (20).

8. Device according to any one of the preceding claims, **characterized in that** the drive (46, 48) for shifting the placing head (44) is accommodated in a main module (100) mountable on to the rotating device (32) of the self-propelled conduit robot vehicle (22) and **in that** the placing head (44) and the guiding device (74) are each connectable by at least one adapter (104, 106) to the main module (100).

9. Device according to Claim 8, **characterized in that** the pivoting drive (102) for a support wheel (70) is also accommodated in the main module (100).

10. Device according to Claim 8 or Claim 9, **characterized in that** at least part of the necessary electronic components, pneumatic valves and/or hydraulic valves is accommodated in the main module (100).

11. Device according to Claim 9 or Claim 10, **characterized in that** the support wheel (70) can be swung in and out to suit the diameter of the individual inaccessible pipe (14).

12. Device according to any one of Claims 6 to 11, **characterized in that** the guiding device (74) uses at least one guide lever (126) which is shiftable between a holding position in which the objects (20) are held in the guiding device (74) and a release position in which the objects (20) are released.

13. Device according to any one of Claims 6 to 12, **characterized in that** the guiding device (74) comprises a rocker (76) which is provided with guide elements (88) and is tiltably mounted on a base body (132) connectable to the main module (100).

14. Device according to Claim 18, **characterized in that** the rocker (76) provided with guide elements (88) is tiltable by at least one cylinder/piston unit (140) in relation to the base body (132).

15. Device according to any one of Claims 5 to 14, **characterized in that** the track of the self-propelled conduit robot vehicle (22) is adjustable to suit the diameter of the inaccessible pipe (14).

## Revendications

1. Dispositif pour insérer des objets longs (20), tels que des câbles ou des conduites, dans des brides de fixation (18) qui sont disposées à l'intérieur d'un tuyau non praticable (14'), avec un châssis (12) qui peut s'appuyer de manière mobile dans le sens longitudinal (R) du tuyau sur la paroi interne du tuyau (14'), avec une tête de pose (44) disposée de manière mobile radialement sur le châssis (12), en fonction de l'axe longitudinal (22') de ce dernier, laquelle tête de pose présente une rainure de réception (58, 58') d'un objet (20), ouverte vers l'extérieur dans le sens radial et qui s'étend au moins approximativement dans le sens de l'axe longitudinal (22') et avec un entraînement (46, 48) destiné à déplacer la tête de pose (44) dans le sens radial, **caractérisé en ce que** la tête de pose (44) présente au moins deux rainures de réception (58, 58') pour chaque fois un objet (20), disposées parallèlement l'une à côté de l'autre.

2. Dispositif selon la revendication 1, **caractérisé en ce que**, dans le sens radial, l'une des rainures de réception (58') est disposée plus vers l'extérieur que l'autre rainure de réception (58) et dans un élément de pose (62) qui peut être repoussé dans le sens radial, de préférence contre la force d'un ressort (64).

3. Dispositif selon la revendication 2, **caractérisé en ce qu'**une rainure de réception (58) au moins est disposée dans le sens périphérique, vu de chaque côté de l'élément de pose (62).

4. Dispositif selon la revendication 2 ou 3, **caractérisé en ce que** la tête de pose (44) présente deux rangées (56, 56') de rainures de réception (58, 58') qui sont espacées dans le sens de l'axe longitudinal (22').

5. Dispositif selon l'une quelconque des revendications 1 à 4, **caractérisé en ce que** le châssis (12) présente un véhicule automoteur robotisé pour les canalisations (22), avec un dispositif de rotation (32) pour la rotation de la tête de pose (44) autour de l'axe longitudinal (22').

6. Dispositif selon l'une quelconque des revendications 1 à 5, **caractérisé en ce qu'**un système de guidage (74) est disposé sur le châssis (12), dans le sens de travail (A) pour insérer les objects (20), en amont de la tête de pose (44), pour le guidage au moins approximativement parallèle des objets (20), en direction des rainures de réception.

7. Dispositif selon la revendication 6, **caractérisé en ce que** le système de guidage (74) présente un frein à friction (80, 80'), qui est de préférence réglable en fonction de chaque objet (20).

8. Dispositif selon l'une quelconque des revendications précédentes, **caractérisé en ce que** l'entraînement (46, 48) pour le déplacement de la tête de pose (44) est logé dans un module principal (100) qui peut être monté sur le système de rotation (32) du véhicule automoteur robotisé pour les canalisations (22) et **en ce que** la tête de pose (44) et le système de guidage (74) peuvent être respectivement accouplés avec le module principal (100), par l'intermédiaire d'au moins un adaptateur (104, 106).

9. Dispositif selon la revendication 8, **caractérisé en ce que** le servomoteur (102) pour une roue d'appui (70) est également logé dans le module principal (100).

10. Dispositif selon l'une quelconque des revendications 8 ou 9, **caractérisé en ce qu'**une partie au moins des composants électroniques, des soupapes pneumatiques et/ou des soupapes hydrauliques nécessaires est logée dans le module principal (100).

11. Dispositif selon l'une quelconque des revendications 9 ou 10, **caractérisé en ce que** la roue d'appui (70) peut être pivotée dans un sens ou dans l'autre, en fonction du diamètre respectif du tuyau (14) non praticable.

12. Dispositif selon l'une quelconque des revendications 6 à 11, **caractérisé en ce qu'**un levier de guidage (126) au moins, réglable entre la position d'arrêt, dans laquelle les objets (20) sont maintenus dans le système de guidage (74) et une position de libération, dans laquelle les objets (20) sont libérés, est associé au système de guidage (74).

13. Dispositif selon l'une quelconque des revendications 6 à 12, **caractérisé en ce que** le système de guidage (74) englobe une bascule (76) munie d'éléments de guidage (88) qui est logée de manière pivotante sur un corps de base (132) qui peut être accouplé avec le module principal (100).

14. Dispositif selon la revendication 13, **caractérisé en ce que** la bascule (76) munie d'éléments de guidage (88) est pivotante par rapport au corps de base (132), par l'intermédiaire d'au moins une unité cylindre/piston.

15. Dispositif selon l'une quelconque des revendications 5 à 14, **caractérisé en ce que** l'écartement des roues du véhicule automoteur robotisé pour les canalisations (22) est réglable en fonction du diamètre du tuyau (14) non praticable.
